# EUROPÄISCHE PATENTSCHRIFT

(11) **EP 2 421 734 B1**
(45) Veröffentlichungstag und Bekanntmachung des Hinweises auf die Patenterteilung: **17.04.2013**
(21) Anmeldenummer: 10705865.3
(22) Anmeldetag: 23.02.2010
(51) Int. Cl.: B60W 10/08, B60K 6/48, B60W 30/045, B60K 6/52, B60K 6/44

(54) **VERFAHREN UND VORRICHTUNG ZUM BETREIBEN EINES FAHRZEUGES, INSBESONDERE EINES HYBRIDFAHRZEUGES**
METHOD AND DEVICE FOR OPERATING A VEHICLE, IN PARTICULAR A HYBRID VEHICLE
PROCÉDÉ ET DISPOSITIF PERMETTANT DE FAIRE FONCTIONNER UN VÉHICULE, EN PARTICULIER UN VÉHICULE HYBRIDE

(30) Priorität: 23.04.2009 DE 102009002586
(43) Veröffentlichungstag der Anmeldung: 29.02.2012
(73) Patentinhaber: Robert Bosch GmbH, 70442 Stuttgart (DE)
(72) Erfinder: MAASS, Alexander, 71636 Ludwigsburg (DE); HELLMANN, Manfred, 71706 Hardthof (DE)
(86) Internationale Anmeldenummer: PCT/EP2010/052292
(87) Internationale Veröffentlichungsnummer: WO 2010/121850

(56) Entgegenhaltungen:
- EP-A2- 1 837 263
- EP-A2- 2 050 642
- US-A1- 2002 105 188
- US-A1- 2003 037 977
- US-A1- 2008 071 451

## Beschreibung

### Stand der Technik

Die Erfindung betrifft ein Verfahren zum Betreiben eines Fahrzeuges, insbesondere eines Hybridfahrzeuges, bei welchem mindestens eine der Achsen des Fahrzeuges durch ein Antriebsaggregat angetrieben wird, wodurch das Fahrzeug mit einem vorgegebenen Solldrehmoment beschleunigt wird, indem ein Antriebsteilmoment auf mindestens eine Achse und die daran gekoppelten Räder übertragen wird sowie eine Vorrichtung zur Durchführung des Verfahrens.

Eine gattungsgemäße Vorrichtung ist aus der DE 35 42 059 C1 bekannt. Das Fahrzeug besitzt eine in herkömmlicher Weise durch einen Verbrennungsmotor antreibbare Hauptantriebsachse. Bei einem erhöhten Schlupf der Räder der Hauptantriebsachse können die Räder einer zuschaltbaren Zusatzantriebsachse mittels eines gesonderten Zusatzantriebsaggregates, insbesondere eines Elektromotors, automatisch angetrieben werden.

Das gattungsbildende Dokument US2008/0071451 offenbart ein Verfahren zum Betreiben eines Fahrzeuges mit den Merkmale des Oberbegriffs von Anspruch 1.

Dabei wird ein Solldrehmoment des Fahrzeuges, welches beispielsweise durch einen Fahrer mittels Betätigung eines Fahrpedals am Fahrzeug eingestellt wird, auf die beiden Achsen des Fahrzeuges verteilt. Bei Kurvenfahrten, bei welchen die Lenkung des Fahrzeuges eingeschlagen ist, tritt der Effekt auf, dass das auf die eingelenkten Räder wirkende Drehmoment mehr zur Beschleunigung des Fahrzeuges beiträgt als das Drehmoment, welches auf die ungelenkten Räder wirkt. In dem Fall, dass hohe, entgegen gerichtete Momente an den beiden Achsen anliegen, würde sich nur durch eine Veränderung des Lenkwinkels das Solldrehmoment des Fahrzeuges unerwünscht ändern. Dies wäre unangenehm spürbar für den Fahrer des Fahrzeuges.

### Offenbarung der Erfindung

Ein Verfahren zum Betreiben eines Fahrzeuges mit den Merkmalen des Anspruchs 1 hat den Vorteil, dass auch bei Kurvenfahrten das eingestellte Solldrehmoment tatsächlich durch das Antriebsverhalten des Fahrzeuges realisiert wird. Dadurch, dass bei einer Kurvenfahrt das Antriebsteilmoment der gelenkten und/oder der ungelenkten Achse so korrigiert wird, dass das Fahrzeug mit dem vorgegebenen Solldrehmoment beschleunigt wird, werden die unterschiedlichen Hebelverhältnisse der Räder der gelenkten und der ungelenkten Achse kompensiert.

Vorteilhafterweise wird das Antriebsteilmoment der gelenkten und/oder der ungelenkten Achse in Abhängigkeit von einem Abstand der Räder zum Drehpunkt des Fahrzeuges korrigiert. Bei einer Kurvenfahrt infolge der eingeschlagenen Lenkung verursachen die verschieden langen Hebelarme der Räder zum Drehpunkt des Fahrzeuges bei einem gleichen Rad-Drehmoment eine unterschiedlich starke Beschleunigungswirkung auf das Fahrzeug, was zu einer unterschiedlichen Wirkung an gelenkter und ungelenkter Achse des Fahrzeuges und somit zu einem differenzierten Beschleunigungsverhalten des Fahrzeuges führt. Dieses differenzierte Beschleunigungsverhalten wird zuverlässig kompensiert.

In einer Ausgestaltung wird das Antriebsteilmoment der gelenkten und/oder der ungelenkten Achse in Abhängigkeit von einem Einschlagwinkel der Räder der gelenkten Achse korrigiert. Die beschriebene Kompensation ist sowohl für Hybridantriebe als auch bei Allradantrieben und konventionellen Antrieben einsetzbar.

Vorteilhafterweise wird das vorgegebene Solldrehmoment bestimmt und in Antriebsteilmomente der gelenkten und der ungelenkten Achse aufgeteilt, wobei mindestens ein Antriebsteilmoment in Abhängigkeit von dem Radeinschlagwinkel der Räder der gelenkten Achse korrigiert wird und anschließend die Antriebsteilmomente auf die gelenkte und die ungelenkte Achse übertragen werden. Da das Solldrehmoment beliebig zwischen gelenkter und ungelenkter Achse umverteilt werden kann, erfolgt die Kompensation immer im Sinne des von dem Fahrer eingestellten Antriebswunsches. Dabei können die gelenkte und die ungelenkte Achse und somit die Räder sowohl positiv als auch negativ angetrieben werden.

In einer Ausgestaltung werden die Antriebsteilmomente in Abhängigkeit von einem Betriebszustand des Fahrzeuges auf die Räder der gelenkten und der ungelenkten Achse aufgeteilt. So können die Antriebsteilmomente in Abhängigkeit von einem Batterieladezustand auf die gelenkte und die ungelenkte Achse aufgeteilt werden. Beispielsweise kann bei einer Verwendung eines Elektromotors als Antriebsaggregat bei einem vollen Ladezustand der Batterie bevorzugt der Elektromotor, welcher von der Batterie betrieben wird, zum Antreiben der einen Achse verwendet werden, während bei geringem Ladezustand die Batterie durch ein, die andere Achse antreibendes Antriebsaggregat, wie zum Beispiel einem Verbrennungsmotor, aufgeladen werden kann.

In einer Weiterbildung erfolgt die Korrektur der Antriebsteilmomente in Abhängigkeit von einem Bezugspunkt, welcher sich auf die gelenkte oder die ungelenkte Achse oder auf eine Position zwischen der gelenkten und der ungelenkten Achse bezieht. Daraus resultiert, dass die als Bezugspunkt ausgewählte Achse als richtig eingestellte Achse betrachtet wird. In Abhängigkeit von diesem Bezugspunkt erfolgt dann die Korrektur der Antriebsteilmomente der anderen Achsen abhängig von der Kurvenfahrt.

Vorteilhafterweise wird als Bezugspunkt für das vorgegebene Solldrehmoment die ungelenkte Achse bestimmt, wobei nach der Aufteilung der Antriebsteilmomente das Antriebsteilmoment der gelenkten Achse in Abhängigkeit des Radeinschlagwinkels der Räder der gelenkten Achse betraglich reduziert wird. Diese Vorgehensweise minimiert die erforderliche Rechenleistung des Systems, da die Zusammenhänge zwischen vorgegebenen Solldrehmoment, Radeinschlagswinkel und korrigierten Antriebsteilmomenten einfach aus einer Tabelle oder einer Kennlinie auslesbar sind.

In einer Ausgestaltung wird als Bezugspunkt für das vorgegebene Solldrehmoment die gelenkte Achse ausgewählt, wobei das Antriebsteilmoment der ungelenkten Achse in Abhängigkeit des Radeinschlagswinkels der gelenkten Räder betraglich erhöht wird. Hierdurch erfolgt eine Kompensation der an den beiden Achsen antreibenden Momente.

Vorteilhafterweise wird als Bezugspunkt für das vorgegebene Solldrehmoment eine Position zwischen der gelenkten und der ungelenkten Achse gewählt, wobei das Antriebsteilmoment an der gelenkten Achse betraglich verringert und das Antriebsteilmoment an der ungelenkten Achse betraglich erhöht wird.

In einer anderen Weiterbildung betrifft die Erfindung eine Vorrichtung zum Betreiben eines Fahrzeuges, insbesondere eines Hybridfahrzeuges, bei welchem mindestens eine der Achsen des Fahrzeuges durch ein Antriebsaggregat angetrieben wird, wodurch das Fahrzeug mit einem vorgegebenen Solldrehmoment beschleunigt wird, indem ein Antriebsteilmoment auf mindestens eine Achse und die daran gekoppelten Räder übertragen wird.

Um das Solldrehmoment des Fahrzeuges immer so einzustellen, dass dieses immer mit dem Fahrerwunsch übereinstimmt, sind Mittel vorhanden, welche bei einer Kurvenfahrt das Antriebsteilmoment der gelenkten und/oder der ungelenkten Achse so korrigieren, dass das Fahrzeug mit dem vorgegebenen Solldrehmoment beschleunigt wird. Somit wird bei Kurvenfahrten immer das eingestellte Solldrehmoment auch tatsächlich durch das Antriebsverhalten des Fahrzeuges realisiert. Ein Fehlverhalten des Fahrzeuges auf Grund von unterschiedlich stark an den Rädern der gelenkten und der ungelenkten Achse wirkenden Kräften wird somit zuverlässig verhindert.

In einer Ausgestaltung korrigieren die Mittel das Antriebsteilmoment der gelenkten und/oder der ungelenkten Achse in Abhängigkeit von einem Abstand der Räder zum Drehpunkt des Fahrzeuges.

Vorteilhafterweise bestimmt eine Steuereinheit das vorgegebene Solldrehmoment und teilt dieses in Antriebsteilmomente der gelenkten und der ungelenkten Achse auf, wobei die Antriebsteilmomente in Abhängigkeit von einem Einschlagwinkel der Räder der gelenkten Achse korrigiert und auf die gelenkte und die ungelenkte Achse übertragen werden. Die Raddrehmomente der Räder der ungelenkten und/oder der gelenkten Achse werden entsprechend den Berechnungen der Steuereinheit korrigiert und eingestellt. Durch die Korrektur der Raddrehmomente wird die gewünschte Beschleunigung oder Verzögerung des Fahrzeuges erreicht.

In einer Ausgestaltung ist die Steuereinheit mit einem ersten Antriebsaggregat zur Ansteuerung der gelenkten Achse und einem zweiten Antriebsaggregat zur Ansteuerung der ungelenkten Achse verbunden ist. Dadurch können die Antriebsteilmomente, die von den Antriebsaggregaten auf die jeweiligen Räder der Achsen übertragen werden, einfach eingestellt werden.

In einer Weiterbildung ist das erste Antriebsaggregat als Verbrennungsmotor und das zweite Antriebsaggregat als Elektromotor ausgebildet. Insbesondere bei solchen Achshybridfahrzeugen wird eine unterschiedliche Beschleunigungswirkung der Vorder- und Hinterräder des Fahrzeugs bei einer eingeschlagenen Lenkung sicher verhindert.

Die Erfindung lässt zahlreiche Ausführungsformen zu. Eine davon soll anhand der in der Zeichnung dargestellten Figuren näher erläutert werden.

Es zeigt:
- Figur 1:: Ausführungsbeispiel für eine erfindungsgemäße Vorrichtung zum Antrieb mechanisch nicht gekoppelter Achsen
- Figur 2:: Hebelverhältnisse an den Fahrzeugrädern bei einer Kurvenfahrt
- Figur 3:: schematisches Ablaufdiagramm für ein erfindungsgemäßes Verfahren zum Betrieb der Vorrichtung nach Figur 1

### Gleiche Merkmale sind mit gleichen Bezugszeichen gekennzeichnet.

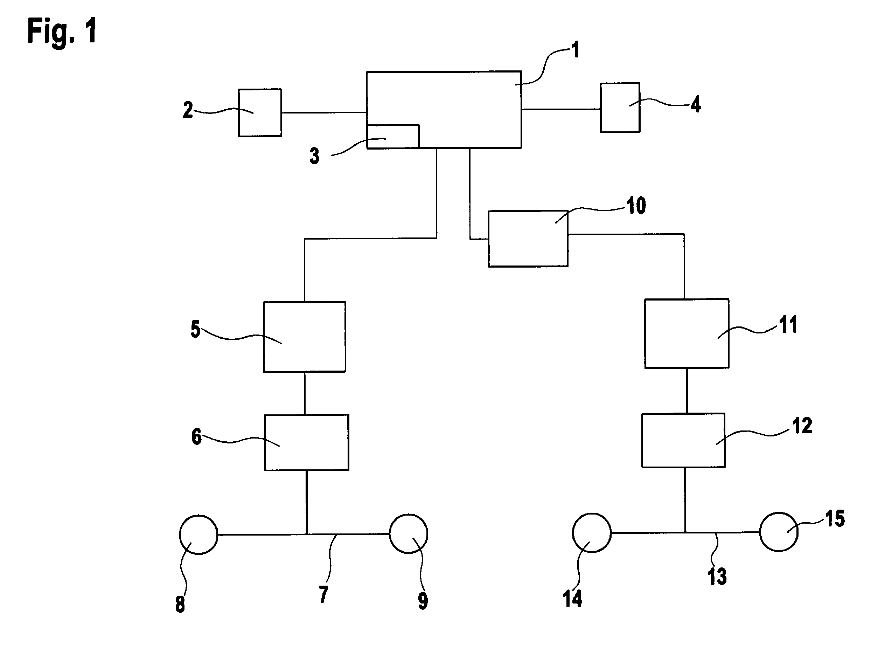

Figur 1 zeigt ein Motorsteuergerät 1, welchem ein gewünschtes Antriebsdrehmoment als Solldrehmoment zugeführt wird. Dieses Solldrehmoment wird dem Motorsteuergerät 1 durch eine Einstellung des Gaspedals 2 durch den Fahrer vorgegeben. Es ist aber auch möglich, dass die Vorgabe durch ein nicht weiter dargestelltes Fahrerassistenzsystem oder ein ebenfalls nicht abgebildetes Fahrdynamiksystem des Fahrzeuges oder ein Automatikgetriebe erfolgt.

Das Motorsteuergerät 1 weist einen Speicher 3 auf, in welchem Kennlinien und Tabellen abgelegt sind, welche zur Steuerung und Regelung des Antriebs des Fahrzeuges notwendig sind.

Darüber hinaus ist das Motorsteuergerät 1 mit einem Lenkwinkelsensor 4 verbunden, welcher den vom Fahrer eingeschlagenen Lenkwinkel detektiert. Weiterhin ist das Motorsteuergerät 1 direkt mit einem Verbrennungsmotor 5 verbunden, der über ein erstes Getriebe 6 die erste Achse 7 antreibt, an welcher die beiden Antriebsräder 8, 9 angeordnet sind. Bei der ersten Achse 7 handelt es sich um eine gelenkte Achse, was bedeutet, das die Lenkbewegung, welcher der Fahrer des Fahrzeuges am Lenkrad ausführt, auf die Vorderräder 8, 9 des Fahrzeuges übertragen werden.

Das Motorsteuergerät 1 ist weiterhin mit einem Elektromotorsteuergerät 10 verbunden, welches einen Elektromotor 11 ansteuert. Der Elektromotor 11 ist über ein zweites Getriebe 12 mit einer zweiten, ungelenken Achse 13 des Fahrzeuges verbunden, welche die Hinterräder 14 und 15 des Fahrzeuges antreibt.

Bei einer Geradeausfahrt des Fahrzeuges wird das vom Fahrer eingegebene Solldrehmoment auf die gelenkte Achse 7 und die ungelenkte Achse 13 aufgeteilt, so dass die Summe der Radmomente der Räder 8, 9; 14, 15 gleich dem Solldrehmoment ist. Bei Kurvenfahrten verändert sich diese Konstellation.

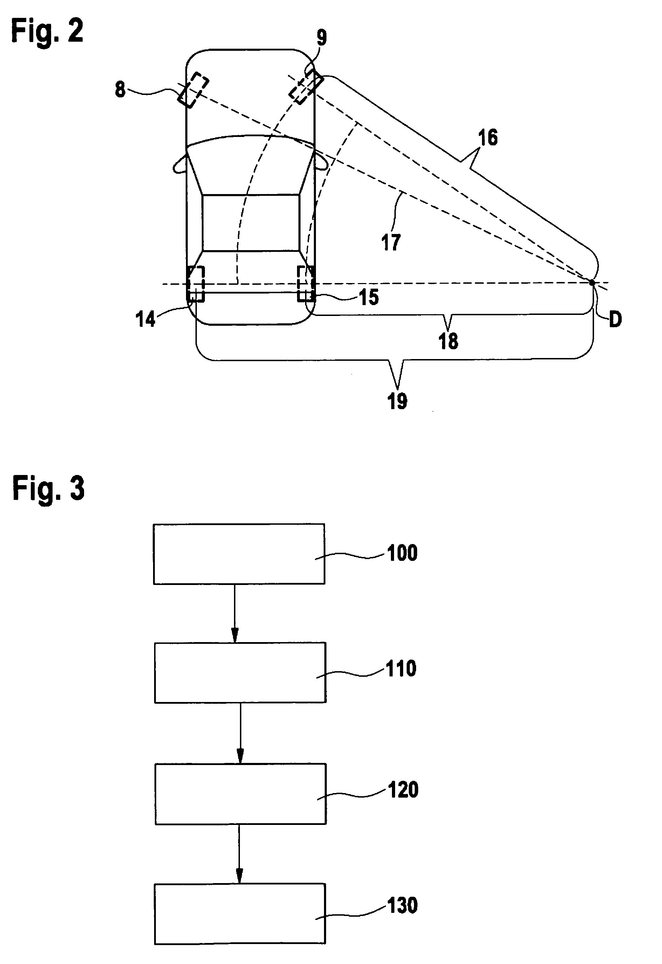

Figur 2 zeigt den Drehpunkt D des Fahrzeuges bei eingeschlagener Lenkung. Es ist ersichtlich, dass die Vorderräder 8, 9 längere Hebelarme 16, 17 als die Hebelarme 18, 19 der Hinterräder 14, 15 des Fahrzeuges auf weisen.

Die längeren Hebelarme 16, 17 der gelenkten Achse 7 führen dazu, dass die Vorderräder 8, 9 bei einem gleichen Drehmoment das Fahrzeug schneller beschleunigen als die Hinterräder 14, 15. Dieser Unterschied kann bei einem Volleinschlag der Vorderräder 8, 9 ca. 30% ausmachen. D.h. bei einem Drehmoment von beispielsweise 100 Nm an der ungelenkten Achse 13 beschleunigt das Fahrzeug genauso schnell, wie die Vorderräder 8, 9 der gelenkten Achse 7, wenn auf diese ein Drehmoment von 70 Nm einwirkt.

Bei einem Achshybrid, wie er in Figur 1 dargestellt ist, hat dies zur Folge, dass bei einer konstanten Fahrpedalstellung (Solldrehmoment = const.) zum Beispiel die gelenkte Achse 7 mit +50 Nm durch den Verbrennungsmotor 5 angetrieben wird. Die ungelenkte Achse 13 wird durch den Elektromotor 11 als Generator mit -60Nm abgebremst, dann wirkt bei der Geradeausfahrt insgesamt ein bremsendes Moment von -10 Nm.

Lenkt der Fahrer nun die Vorderräder 8, 9 voll ein und wird die beschriebene erfindungsgemäße Kompensation nicht angewendet, dann bleibt zwar die Summe aus dem Achsmoment der gelenkten Achse 7 und dem Achsmoment der ungelenkten Achse 13 bei -10 Nm. Da aber die Räder 8, 9 der gelenkte Achse 7, wie erläutert, einen wesentlich längeren Hebelarm 16, 17 aufweisen, führt dies bei einer unveränderten Gaspedalstellung dazu, dass das Fahrzeug plötzlich beschleunigt wird.

Schaltet das Motorsteuergerät 5 während der Kurvenfahrt den Verbrennungsmotor 5 aus, werden die vom Fahrer gewünschten -10 Nm ausschließlich von den Rädern der ungelenkten Achse 13 geliefert, wodurch das Fahrzeug plötzlich wieder verzögert wird.

Solchen Effekten wird durch das Verfahren vorgebeugt, welches mit Hilfe der Figur 3 näher erläutert werden soll. Der Einfachheit halber werden hier anstelle der Raddrehmomente der einzelnen Räder nur die Antriebsteilmomente der gelenkten 7 und der ungelenkten Achse 13 betrachtet, welche jeweils die Vorderräder 8, 9 und die Hinterräder 14, 15 des Fahrzeuges verbinden.

Im Block 100 detektiert das Motorsteuergerät 1 die Vorgabe eines Solldrehmomentes, welches in Antriebsteilmomente auf die Vorder- und die Hinterachse, beispielsweise in Abhängigkeit eines Ladezustandes einer Hochvoltbatterie, welche den Elektromotor 11 antreibt, aufgeteilt wird. Im Block 110 wird der Lenkwinkel detektiert.

Im Block 120 wird das Antriebsteilmoment der ungelenkten Achse 13 als richtig betrachtet. Das Antriebsteilmoment der gelenkten Achse 7 wird in Abhängigkeit vom gemessenen Lenkwinkel mit einem Faktor ≤ 1 betraglich reduziert. In einer besonders einfachen Ausführung wird der Faktor aus dem Kosinus des Einschlagswinkels der Räder an der gelenkten Achse bestimmt.

Alternativ wird das Solldrehmoment auf einen Punkt zwischen den Achsen 7, 13 bezogen. Der Bezugspunkt kann beispielsweise an der vorderen Sitzbank im Bereich des Fahrersitzes liegen, wodurch das Beschleunigungsgefühl für den Fahrer verbessert wird. Das Antriebsteilmoment an der ungelenkten Achse 13 wird in Abhängigkeit vom Lenkwinkel betraglich erhöht, während das Antriebsteilmoment an der ungelenkten Achse abhängig vom Lenkwinkel betraglich verringert wird.

Im Block 130 werden die im Block 120 bestimmten Antriebsteilmomente an die gelenkte 7 und die ungelenkte Achse 13 ausgegeben.

## Patentansprüche

1. Verfahren zum Betreiben eines Fahrzeuges, insbesondere eines Hybridfahrzeuges, bei welchem mindestens eine der Achsen (7,13) des Fahrzeuges durch ein Antriebsaggregat (5,11) angetrieben wird, wodurch das Fahrzeug mit einem vorgegebenen Solldrehmoment beschleunigt wird, indem ein Antriebsteilmoment auf mindestens eine Achse (7,13) und die daran gekoppelten Räder (8,9;14,15) übertragen wird, wobei bei einer Kurvenfahrt das Antriebsteilmoment der gelenkten (7) und/oder der ungelenkten Achse (13) so korrigiert wird, dass das Fahrzeug mit dem vorgegebenen Solldrehmoment beschleunigt wird, **dadurch gekennzeichnet, dass** das Antriebsteilmoment der gelenkten (7) und/oder der ungelenkten Achse (13) in Abhängigkeit von einem Abstand (16,17;18,19) der Räder (8,9;14,15) zum Drehpunkt (D) des Fahrzeuges korrigiert wird.

2. Verfahren nach Anspruch 1, **dadurch gekennzeichnet, dass** das Antriebsteilmoment der gelenkten (7) und/oder der ungelenkten Achse (13) in Abhängigkeit von einem Einschlagwinkel der Räder (8,9) der gelenkten Achse korrigiert wird.

3. Verfahren nach Anspruch 2, **dadurch gekennzeichnet, dass** das vorgegebene Solldrehmoment bestimmt und in Antriebsteilmomente der gelenkten (7) und der ungelenkten Achse (13) aufgeteilt wird, wobei mindestens ein Antriebsteilmoment in Abhängigkeit von dem Einschlagwinkel der Räder (8,9) der gelenkten Achse (7) korrigiert wird und anschließend die ermittelten Antriebsteilmomente auf die gelenkte (7) und die ungelenkte Achse (13) übertragen werden.

4. Verfahren nach Anspruch 3, **dadurch gekennzeichnet, dass** die Antriebsteilmomente in Abhängigkeit von einem Betriebszustand des Fahrzeuges auf die gelenkte (7) und die ungelenkte Achse (13) aufgeteilt werden.

5. Verfahren nach mindestens einem der vorhergehenden Ansprüche, **dadurch gekennzeichnet, dass** die Korrektur der Antriebsteilmomente in Abhängigkeit von einem Bezugspunkt erfolgt, welcher sich auf die gelenkte (7) oder die ungelenkte Achse (13) oder auf eine Position zwischen der gelenkten (7) und der ungelenkten Achse (13) bezieht.

6. Verfahren nach Anspruch 5, **dadurch gekennzeichnet, dass** als Bezugspunkt für das vorgegebene Solldrehmoment die ungelenkte Achse (13) bestimmt wird, wobei das Antriebsteilmoment der gelenkten Achse (7) in Abhängigkeit des Einschlagwinkels der Räder (8,9) der gelenkten Achse (7) korrigiert wird.

7. Verfahren nach Anspruch 5, **dadurch gekennzeichnet, dass** als Bezugspunkt für das vorgegebene Solldrehmoment die gelenkte Achse (7) ausgewählt wird, wobei das Antriebsteilmoment der ungelenkten Achse (13) in Abhängigkeit des Einschlagwinkels der Räder (8,9) betraglich erhöht wird.

8. Verfahren nach Anspruch 5, **dadurch gekennzeichnet, dass** als Bezugspunkt für das vorgegebene Solldrehmoment eine Position zwischen der gelenkten (7) und der ungelenkten Achse (13) gewählt wird, wobei das Antriebsteilmoment an der gelenkten Achse (7) betraglich verringert und das Antriebsteilmoment an der ungelenkten Achse (13) betraglich erhöht wird.

9. Vorrichtung zum Betreiben eines Fahrzeuges, insbesondere eines Hybridfahrzeuges, bei welchem mindestens eine der Achsen (7,13) des Fahrzeuges durch ein Antriebsaggregat (5,11) angetrieben wird, wodurch das Fahrzeug mit einem vorgegebenen Solldrehmoment beschleunigt wird, indem ein Antriebsteilmoment auf mindestens eine Achse (7,13) und die daran gekoppelten Räder (8,9;14,15) übertragen wird, wobei Mittel (1) vorhanden sind, welche bei einer Kurvenfahrt das Antriebsteilmoment der gelenkten (7) und/oder der ungelenkten Achse (13) so korrigieren, dass das Fahrzeug mit dem vorgegebenen Solldrehmoment beschleunigt wird, **dadurch gekennzeichnet, dass** die Mittel (1) das Antriebsteilmoment der gelenkten (7) und/oder der ungelenkten Achse (13) in Abhängigkeit von einem Abstand (16,17;18,19) der Räder (8,9;14,15) zum Drehpunkt (D) des Fahrzeuges korrigieren.

10. Vorrichtung nach Anspruch 9, **dadurch gekennzeichnet, dass** eine Steuereinheit (1) das vorgegebene Solldrehmoment bestimmt und in Antriebsteilmomente der gelenkten (7) und der ungelenkten Achse (13) aufteilt, wobei die Antriebsteilmomente in Abhängigkeit von einem Einschlagwinkel mindestens eines der Räder (8,9) der gelenkten Achse (7) korrigiert und auf die gelenkte (7) und die ungelenkte Achse (13) übertragen werden.

11. Vorrichtung nach Anspruch 9 oder 10, **dadurch gekennzeichnet, dass** die Steuereinheit (1) mit einem ersten Antriebsaggregat (5) zur Ansteuerung der gelenkten Achse (7) und einem zweiten Antriebsaggregat (11) zur Ansteuerung der ungelenkten Achse (13) verbunden ist.

12. Vorrichtung nach Anspruch 11, **dadurch gekennzeichnet, dass** das erste Antriebsaggregat (5) als Verbrennungsmotor und das zweite Antriebsaggregat (11) als Elektromotor ausgebildet ist.

## Claims

1. Method for operating a vehicle, in particular a hybrid vehicle, in which at least one of the axles (7, 13) of the vehicle is driven by a drive unit (5, 11), as a result of which the vehicle is accelerated with a predefined setpoint torque by virtue of the fact that a partial drive torque is transmitted to at least one axle (7, 13) and to the wheels (8, 9; 14, 15) coupled thereto, wherein in the case of cornering the partial drive torque of the steered axle (7) and/or of the unsteered axle (13) is corrected in such a way that the vehicle is accelerated with the predefined setpoint torque, **characterized in that** the partial drive torque of the steered axle (7) and/or of the unsteered axle (13) is corrected as a function of a distance (16, 17; 18, 19) between the wheels (8, 9; 14, 15) and the centre of rotation (D) of the vehicle.

2. Method according to Claim 1, **characterized in that** the partial drive torque of the steered axle (7) and/or of the unsteered axle (13) is corrected as a function of a steering angle of the wheels (8, 9) of the steered axle.

3. Method according to Claim 2, **characterized in that** the predefined setpoint torque is determined and is divided into partial drive torques of the steered axle (7) and of the unsteered axle (13), wherein at least one partial drive torque is corrected as a function of the steering angle of the wheels (8, 9) of the steered axle (7) and subsequently the determined partial drive torques are transmitted to the steered axle (7) and to the unsteered axle (13).

4. Method according to Claim 3, **characterized in that** the partial drive torques are divided between the steered axle (7) and the unsteered axle (13) as a function of an operating state of the vehicle.

5. Method according to at least one of the preceding claims, **characterized in that** the correction of the partial drive torques takes place as a function of a reference point which relates to the steered axle (7) or the unsteered axle (13) or to a position between the steered axle (7) and the unsteered axle (13).

6. Method according to Claim 5, **characterized in that** the unsteered axle (13) is determined as a reference point for the predefined setpoint torque, wherein the partial drive torque of the steered axle (7) is corrected as a function of the steering angle of the wheels (8, 9) of the steered axle (7).

7. Method according to Claim 5, **characterized in that** the steered axle (7) is selected as a reference point for the predefined setpoint torque, wherein the partial drive torque of the unsteered axle (13) is increased in magnitude as a function of the steering angle of the wheels (8, 9).

8. Method according to Claim 5, **characterized in that** a position between the steered axle (7) and the unsteered axle (13) is selected as a reference point for the predefined setpoint torque, wherein the partial drive torque at the steered axle (7) is reduced in magnitude, and the partial drive torque and the unsteered axle (13) is increased in magnitude.

9. Device for operating a vehicle, in particular a hybrid vehicle, in which at least one of the axles (7, 13) of the vehicle is driven by a drive unit (5, 11), as a result of which the vehicle is accelerated with a predefined setpoint torque by transmitting a partial drive torque to at least one axle (7, 13) and the wheels (8, 9; 14, 15) coupled thereto, wherein means (1) are present which in the case of cornering correct the partial drive torque of the steered axle (7) and/or of the unsteered axle (13) in such a way that the vehicle is accelerated with the predefined setpoint torque, **characterized in that** the means (1) correct the partial drive torque of the steered axle (7) and/or of the unsteered axle (13) as a function of a distance (16, 17; 18, 19) between the wheels (8, 9; 14, 15) and the centre of rotation (D) of the vehicle.

10. Device according to Claim 9, **characterized in that** a control unit (1) determines the predefined setpoint torque and divides it into partial drive torques of the steered axle (7) and of the unsteered axle (13), wherein the partial drive torques are corrected as a function of a steering angle of at least one of the wheels (8, 9) of the steered axle (7) and are transmitted to the steered axle (7) and to the unsteered axle (13).

11. Device according to Claim 9 or 10, **characterized in that** the control unit (1) is connected to a first drive unit (5) for actuating the steered axle (7) and to a second drive unit (11) for actuating the unsteered axle (13).

12. Device according to Claim 11, **characterized in that** the first drive unit (5) is embodied as an internal combustion engine, and the second drive unit (11) is embodied as an electric motor.

## Revendications

1. Procédé permettant de faire fonctionner un véhicule, notamment un véhicule hybride, dans lequel au moins un des essieux (7, 13) du véhicule est entraîné par un groupe d'entraînement (5, 11), ce qui permet de faire accélérer le véhicule à un couple de rotation théorique prédéfini, en transmettant un couple de partie d'entraînement à au moins un essieu (7, 13) et aux roues (8, 9 ; 14, 15) y étant rattachées, sachant qu'en cas de conduite en virage, le couple de partie d'entraînement de l'essieu articulé (7) et/ou de l'essieu non articulé (13) est corrigé de telle sorte que le véhicule est placé en accélération au couple de rotation théorique prédéfini, **caractérisé en ce que** le couple de partie d'entraînement de l'essieu articulé (7) et/ou de l'essieu non articulé (13) est corrigé en fonction d'un écartement (16, 17 ; 18, 19) des roues (8, 9 ; 14, 15) par rapport au point de rotation (D) du véhicule.

2. Procédé selon la revendication 1, **caractérisé en ce que** le couple de partie d'entraînement de l'essieu articulé (7) et/ou de l'essieu non articulé (13) est corrigé en fonction d'un angle de braquage des roues (8, 9) de l'essieu articulé.

3. Procédé selon la revendication 2, **caractérisé en ce que** le couple de rotation théorique prédéfini est défini et divisé en couples de partie d'entraînement de l'essieu articulé (7) et de l'essieu non articulé (13), au moins un couple de partie d'entraînement étant corrigé en fonction de l'angle de braquage des roues (8, 9) de l'essieu articulé (7) avant de transmettre les couples de partie d'entraînement déterminés à l'essieu articulé (7) et à l'essieu non articulé (13).

4. Procédé selon la revendication 3, **caractérisé en ce que** les couples de partie d'entraînement sont divisés en fonction d'un état de fonctionnement du véhicule en essieu articulé (7) et en essieu non articulé (13).

5. Procédé selon au moins l'une quelconque des revendications précédentes, **caractérisé en ce que** la correction des couples de partie d'entraînement s'effectue en fonction d'un point de référence faisant référence à l'essieu articulé (7) ou à l'essieu non articulé (13) ou à une position entre l'essieu articulé (7) et l'essieu non articulé (13).

6. Procédé selon la revendication 5, **caractérisé en ce que** le point de référence du couple de rotation théorique prédéfini est l'essieu non articulé (13), le couple de partie d'entraînement de l'essieu articulé (7) étant corrigé en fonction de l'angle de braquage des roues (8, 9) de l'essieu articulé (7).

7. Procédé selon la revendication 5, **caractérisé en ce que** le point de référence du couple de rotation théorique prédéfini sélectionné est l'essieu articulé (7), le couple de partie d'entraînement de l'essieu non articulé (13) étant augmenté d'une certaine valeur en fonction de l'angle de braquage des roues (8, 9).

8. Procédé selon la revendication 5, **caractérisé en ce que** le point de référence du couple de rotation théorique prédéfini sélectionné étant une position entre l'essieu articulé (7) et l'essieu non articulé (13), le couple de partie d'entraînement étant réduit d'une certaine valeur au niveau de l'essieu articulé (7) et le couple de partie d'entraînement étant augmenté d'une certaine valeur au niveau de l'essieu non articulé (13).

9. Dispositif permettant de faire fonctionner un véhicule, notamment un véhicule hybride, dans lequel au moins un des essieux (7, 13) du véhicule est entraîné par un groupe d'entraînement (5, 11), ce qui permet de faire accélérer le véhicule à un couple de rotation théorique prédéfini, en transmettant un couple de partie d'entraînement à au moins un essieu (7, 13) et aux roues (8, 9 ; 14, 15) y étant rattachées, des moyens (1) étant prévus, en cas de conduite en virage, pour corriger le couple de partie d'entraînement de l'essieu articulé (7) et/ou de l'essieu non articulé (13) de telle sorte que le véhicule est placé en accélération au couple de rotation théorique prédéfini, **caractérisé en ce que** les moyens (1) corrigent le couple de partie d'entraînement de l'essieu articulé (7) et/ou de l'essieu non articulé (13) en fonction d'un écartement (16, 17 ; 18, 19) des roues (8, 9 ; 14, 15) par rapport au point de rotation (D) du véhicule.

10. Dispositif selon la revendication 9, **caractérisé en ce qu'**une unité de commande (1) définit le couple de rotation théorique prédéfini et le divise en couples de partie d'entraînement de l'essieu articulé (7) et de l'essieu non articulé (13), les couples de partie d'entraînement étant corrigés en fonction d'un angle de braquage d'au moins une des roues (8, 9) de l'essieu articulé (7) et étant transmis à l'essieu articulé (7) et à l'essieu non articulé (13).

11. Dispositif selon la revendication 9 ou 10, **caractérisé en ce que** l'unité de commande (1) est reliée à un premier groupe d'entraînement (5) servant à commander l'essieu articulé (7) et à un deuxième groupe d'entraînement (11) servant à commander l'essieu non articulé (13).

12. Dispositif selon la revendication 11, **caractérisé en ce que** le premier groupe d'entraînement (5) prend la forme d'un moteur à combustion interne et le deuxième groupe d'entraînement (11) prend la forme d'un moteur électrique.
